(19) **Europäisches Patentamt / European Patent Office / Office européen des brevets**

(11) **EP 2 489 712 B1**

(12) **EUROPEAN PATENT SPECIFICATION**

(45) Date of publication and mention of the grant of the patent:
**04.07.2018 Bulletin 2018/27**

(21) Application number: **10823332.1**

(22) Date of filing: **07.10.2010**

(51) Int Cl.:
*C09J 7/38* (2018.01)    *C09J 123/22* (2006.01)

(86) International application number:
**PCT/JP2010/067686**

(87) International publication number:
**WO 2011/046064 (21.04.2011 Gazette 2011/16)**

(54) **PAINT FILM-PROTECTING SHEET**

SCHUTZFOLIE FÜR EINEN FARBENFILM

FEUILLE PROTECTRICE POUR UN FILM DE PEINTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2009 JP 2009238651**

(43) Date of publication of application:
**22.08.2012 Bulletin 2012/34**

(73) Proprietors:
• **Nitto Denko Corporation**
  **Ibaraki-shi, Osaka 567-8680 (JP)**
• **Kansai Paint Co., Ltd**
  **Amagasaki-shi, Hyogo 661-8555 (JP)**

(72) Inventors:
• **IGARASHI, Takeshi**
  **Ibaraki-shi**
  **Osaka 567-8680 (JP)**
• **SUZUKI, Toshitaka**
  **Ibaraki-shi**
  **Osaka 567-8680 (JP)**

• **SAITO, Yuki**
  **Ibaraki-shi**
  **Osaka 567-8680 (JP)**
• **HIRANO, Yoshikuni**
  **Hiratsuka-shi**
  **Kanagawa 254-8562 (JP)**
• **KONDO, Masahiro**
  **Hiratsuka-shi**
  **Kanagawa 254-8562 (JP)**

(74) Representative: **Grünecker Patent- und Rechtsanwälte**
**PartG mbB**
**Leopoldstraße 4**
**80802 München (DE)**

(56) References cited:
EP-A1- 0 955 346        EP-A2- 0 839 886
JP-A- 10 330 704        JP-A- 2000 265 136
JP-A- 2001 348 549      JP-A- 2007 514 021
JP-A- 2008 138 067      JP-A- 2010 138 313

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a paint film-protecting sheet that protects a paint film from damage, such as scratches, stains, etc.

BACKGROUND ART

A technique is known that protects a paint film by bonding a protecting sheet to the paint film, with the objective of preventing the paint film surface from being damaged when an article having the paint film (for example, a painted automobile and its parts, a metal plate such as a steel plate and products formed therefrom, etc.) is transported, stored, cured, used for construction, etc. Paint film-protecting sheets used for such a purpose are generally configured to have a pressure-sensitive adhesive layer on one side of a sheet-shaped resin substrate, and protection can be effectuated by bonding the protecting sheet to the surface of the adherend (the paint film that is the object to be protected) via the pressure-sensitive adhesive layer.
A paint film-protecting sheet is desired that does not cause a phenomenon (adhesive residue) in which encrusted material derived from the sheet (typically, some of the pressure-sensitive adhesive that forms the pressure-sensitive adhesive layer) remains on the paint film surface after peeling off (removing) the sheet, which has finished its protective purpose, from the paint film surface. Examples of conventional methods for preventing adhesive residue include a method that admixes into the pressure-sensitive adhesive a substance that reduces the adhesive strength (Patent Reference 1), and a method that suppresses adhesive residue by using a substrate that includes a weather-proofing agent and has a predetermined ultraviolet transmittance for preventing degradation of the pressure-sensitive adhesive layer (Patent Reference 2). As another adhesive residue preventing method, a method can be mentioned that disposes a prescribed anchoring agent between the substrate and the pressure-sensitive adhesive (Patent Reference 3). In addition, in Patent Reference 4, a method was described that improves the peeling properties by requiring the polydispersivity index and the weight-average molecular weight of the base polymer, which constitutes the pressure-sensitive adhesive layer, to be within prescribed ranges.

Prior Art References

Patent References

Patent Reference 1 : Japan Patent No. 2832565
Patent Reference 2 : Japan Published Patent Application No. 2007-238746.
Patent Reference 3 : Japan Published Patent Application No. 2005-213280.
Patent Reference 4 : Japan Published Patent Application No. H10-176152.
Patent Reference 5: Japan Published Patent Application No. 2008-138067.
Patent Reference 6: Japan Published Patent Application No. 2001-34854.
Patent Reference 7: EP 0955346 A1.

SUMMARY OF THE INVENTION

Problem(s) to be Solved by the Invention

In recent years, there has been an ever increasing demand to improve the exterior appearance of paint films as a part of enhancing the value of products (automobiles, etc.). Because of this, there is a demand for techniques that prevent the above-mentioned adhesive residue to an even higher degree. For example, from the standpoint of preventing adhesive residue not only on a highly smooth paint film, such as on a new automobile surface, but also on a paint film after commencing use of the automobile (a paint film having microscopic indentations and ridges, e.g., a paint film that has been re-polished), it would be beneficial if a paint film-protecting sheet is provided that can exhibit an improved adhesive residue prevention property (an anti-adhesive residue property), even in case it used to protect a paint film by adhering it to a paint film having an unfavorable surface condition, etc.
The present invention has been made in view of such circumstances and its primary purpose is to provide a paint film-protecting sheet that prevents adhesive residue on the paint film to a higher degree.

Means for Solving the Problem(s)

According to the present invention, a paint film-protecting sheet is disclosed that includes a pressure-sensitive adhesive layer on a support substrate. The pressure-sensitive adhesive layer is comprised of a non-crosslinked pressure-sensitive adhesive. Its weight-average molecular weight (Mw) is $65 \times 10^4 \sim 120 \times 10^4$. In addition, the number-average molecular weight (Mn) of the pressure-sensitive adhesive is $10 \times 10^4 \sim 25 \times 10^4$. In addition the polydispersivity index (Mw/Mn) of the pressure-sensitive adhesive is 5 or greater, and the base polymer of the pressure-sensitive adhesive is an isobutylene-based polymer. A paint film-protecting sheet having such a composition can exhibit improved adhesive residue prevention properties, even to surfaces, such as re-polished surfaces, that are prone to adhesive residues.

In a preferred embodiment of the paint film-protecting sheet disclosed herein, the polydispersivity index (Mw/Mn) of the pressure-sensitive adhesive is 3.5 or greater (typically 3.5~7.5). Such a paint film-protecting sheet can achieve a higher level of adhesive residue prevention properties. Further, although there is a general tendency for the solution viscosity of a pressure-sensitive adhesive to increase as the Mw of the pressure-sensitive adhesive increases, a pressure-sensitive adhesive having a solution viscosity, which is comparatively low for the Mw, can be made by making the polydispersivity index 3.5 or greater as noted above. This is useful from the standpoint of the handling properties of the pressure-sensitive adhesive composition (typically, a pressure-sensitive adhesive solution that dissolves the pressure-sensitive adhesive in an appropriate solvent).

In another preferred embodiment of the paint film-protecting sheet disclosed herein, the viscosity of a 10 wt% toluene solution of the pressure-sensitive adhesive at 30°C is 5 mPa·s or less (typically, 0.4 mPa·s ~ 5.0 mPa·s). With such a pressure-sensitive adhesive, the handling properties of the pressure-sensitive adhesive solution are good because the solution viscosity of the pressure-sensitive adhesive is comparatively low for the concentration of the non-volatiles (NV).

It is preferable that the pressure-sensitive adhesive contain two or more types of polymers, which have different Mw, as the base polymer (the main component amongst the polymer components contained in the pressure-sensitive adhesive, i.e. the component that accounts for 50% or more by weight). Herein, "polymer" means a polymer having a molecular weight of about $1 \times 10^4$ or greater. With such a composition, the Mw and Mn of the pressure-sensitive adhesive can be set in the prescribed ranges and at least one (preferably both) of the polydispersivity index and viscosity of the pressure-sensitive adhesive can be easily adjusted by the choice and the mixing ratio of the above-mentioned two or more polymers.

In a preferred embodiment of the paint film-protecting sheet disclosed herein, the base polymer of the pressure-sensitive adhesive is an isobutylene-based polymer. A paint film-protecting sheet having a pressure-sensitive adhesive of such a composition is preferred because adhesion marks will rarely remain on the paint film (e.g., a paint film of an automobile).

The amount of component(s) having a molecular weight of 2000 or less in the pressure-sensitive adhesive is 0.1~5 parts by weight per 100 parts by weight of the base polymer contained in the pressure-sensitive adhesive. By including in the pressure-sensitive adhesive in a moderate amount, such low molecular weight component(s) can improve the pressure-sensitive adhesive properties (e.g., the pressure-sensitive adhesive strength to low adhesion paint films, which will be discussed below). On the other hand, if the pressure-sensitive adhesive contains too much of the above-mentioned low molecular weight component(s), it may readily generate adhesive residues or contamination of the paint film, etc. Thus, with the pressure-sensitive adhesive of the paint film-protecting sheet disclosed herein, it is preferable that the amount of the component(s) having a molecular weight of 2000 or less is in the above-mentioned range.

The pressure-sensitive adhesive in the technology disclosed herein can include a tackifier. A paint film-protecting sheet having a pressure-sensitive adhesive of such a composition preferably can be used on a wider variety of paint films. From the standpoint of preventing adhesive residues and contamination of the adherend (paint film), it is preferable that the amount of tackifier is 0.01~5 parts by weight to 100 parts by weight of the base polymer.

In a preferred embodiment, the tackifier is one or two or more selected from: (a) phenol-based compounds having a solubility parameter (SP value) of 8.5 $(cal/cm^3)^{1/2}$ or greater, (b) amine-based compounds having an SP value of 8.5 $(cal/cm^3)^{1/2}$ or greater, and (c) the rosin-family. Preferably, the phenol-based compounds can be selected, for example, from one or two or more of phenol resins, alkylphenol resins, rosin-modified phenol-based resins and terpene-modified phenol resins. By adding a small quantity of tackifier, the adhesive properties (e.g., the pressure-sensitive adhesive strength to low adhesion paint films) can be effectively improved. In case the base polymer is a polyisobutylene-based polymer, it is particularly useful to use a tackifier selected from the above-mentioned (a) to (c).

BRIEF DESCRIPTION OF THE DRAWING

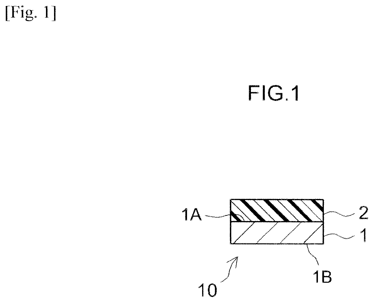

[Fig. 1] Fig. 1 is a cross-sectional drawing schematically showing an example of a paint film-protecting sheet according to the present invention.

MODE(S) FOR CARRYING OUT THE INVENTION

Preferred embodiments of the present invention will be described below. Note that technical matters necessary to practice the invention, besides those specifically mentioned in the present specification, may be understood to be design matters for a person skilled in the art that are based on the prior art in the pertinent field. The present invention may be practiced based on the contents disclosed herein and technical knowledge in the pertinent field.

A paint film-protecting sheet according to the present invention (e.g., an automotive paint film-protecting sheet used to protect an automobile and its parts) includes a pressure-sensitive adhesive layer on a sheet-shaped support substrate. For example, as schematically shown in Fig. 1, the paint film-protecting sheet 10 has a configuration in which a pressure-sensitive adhesive layer 2 is provided on one side 1A of the support substrate 1, and the pressure-sensitive adhesive layer 2 is used to adhere to an adherend (an object to be protected, e.g., a product having a paint film, such as an automobile or its parts). Before use (i.e. before adhesion to the adherend) of the paint film-protecting sheet 10, the surface of the pressure-sensitive adhesive 2 (the pressure-sensitive adhesive surface) can be protected by a release liner (not shown in the drawing) that serves as a peelable surface for at least the pressure-sensitive adhesive layer side. Further, by providing the other surface (the back surface) 1B of the substrate 1 with a peelable surface, a paint film-protecting sheet 10 is also possible that has a form, which is protected by winding the paint film-protecting sheet 10 into a roll and by bringing the pressure-sensitive adhesive layer 2 into contact with said other surface.

The techniques disclosed herein preferably can be applied to a paint film-protecting sheet in which a resin sheet serves as the support substrate and includes a resin compound, such as polyolefin, polyester (e.g., polyethylene terephthalate (PET)), etc., as the main component (typically, a resin sheet obtained by molding a resin composition, which includes such a resin compound as the main component, into a film). As a particularly preferred application, a paint film-protecting sheet can be mentioned that includes a polyolefin-based resin as the main resin component comprising the substrate (i.e. a polyolefin-based resin sheet serves as the support substrate). A substrate having such a composition is also preferred from the standpoint of recyclability, etc. For example, a polyolefin-based resin sheet can be preferably used that has polyethylene (PE) resin or polypropylene (PP) resin as 50 wt% or greater of the entire substrate (in other words, the total weight of the PE resin and the PP resin accounts for 50 wt% or greater of the entire substrate).

As the above-mentioned polyolefin-based resin sheet (film), a resin sheet (PP resin sheet) can be preferably used that primarily includes PP resin(s) as the resin component(s) comprising the sheet (typically, the resin component(s) include(s) PP resin(s) in excess of 50 wt%). For example, a resin sheet is preferred that includes PP resin(s) as about 60 wt% or more (more preferably, 75 wt% or more) of the resin component(s). From the standpoint of heat resistance, a resin sheet can be preferably used that forms a continuous structure (continuous phase) from PP resin(s). The resin sheet may also be essentially constituted from one or two or more PP resin(s) as the resin component(s) (i.e. it includes only PP resin(s) as the resin component(s)). A paint film-protecting sheet is preferred that uses a resin sheet having a continuous structure of PP resin(s) as the substrate, because the paint film-protecting sheet will be easily prevented from lifting-off from the adherend (paint film), which would otherwise be caused by its thermal history, e.g., temperature increase(s) during outdoor protection, etc.

The support substrate may have a single-layer structure or a multi-layer structure comprised of two or more layers. In case of a multi-layer structure, it is preferred that at least one layer has the above-mentioned continuous structure of PP resin(s). The remainder of the above-mentioned resin component may be a polyolefin-based resin (PE resin, etc.) having an olefin-based polymer as the main component, in which the primary monomer of the olefin-based polymer is ethylene or an $\alpha$-olefin having four or more carbons, or may be a resin other than a polyolefin-based resin. As an example of a resin sheet that is preferably used as the support substrate for the paint film-protecting sheet disclosed herein, a polyolefin-based resin sheet can be mentioned that is essentially made from PP resin(s) and PE resin(s) as the resin components (typically, a PP resin sheet that includes PP resin(s) as the main component of the resin components and PE resin(s) as the remainder).

Various polymers (propylene-based polymers) that include propylene as a component can be used as the above-mentioned PP resin. The PP resin may also be substantially made from one or two or more types of a propylene-based polymer. For example, the below-mentioned polypropylenes are included within the general concept of a propylene-based polymer as mentioned herein.

A homopolymer of propylene (homopolypropylene). For example, isotactic polypropylene.

A random copolymer (random polypropylene) of propylene and another $\alpha$-olefin (typically, one or two or more types selected from ethylene and $\alpha$-olefins having 4~10 carbon atoms). Preferably, a random polypropylene having propylene as the main monomer (the main constituent monomer, i.e. a component accounting for 50 wt% or more of all of the monomers). For example, a random polypropylene obtained by random copolymerization of propylene 96~99.9 mol% and the above-mentioned other $\alpha$-olefin (preferably ethylene and/or butene) 0.1~4 mol%.

A block copolymer (block polypropylene) including a copolymer (preferably, a copolymer including propylene as the main monomer) obtained by block copolymerization of propylene and another $\alpha$-olefin (typically, one or two or more types selected from ethylene and $\alpha$-olefins having 4~10 carbon atoms) and typically further including a rubber component that includes as a component at least one from among propylene and the above-mentioned other $\alpha$-olefins as a byproduct. For example, a block polypropylene including a polymer obtained by block copolymerization of propylene 90~99.9 mol% and the above-mentioned other $\alpha$-olefin(s) (preferably ethylene and/or butene) 0.1~10 mol% and additionally including a rubber component that includes as a component at least one from among propylene and the above-mentioned other $\alpha$-olefin(s) as a byproduct.

The above-mentioned PP resin may be substantially made from one or two or more types of such propylene-based polymers or may be a thermoplastic olefin resin (TPO) or a thermoplastic elastomer (TPE) of a reactor blend-type obtained by copolymerizing a large amount of a rubber component with the propylene-based polymer, or a dry blend-type obtained by mechanically dispersing the rubber component in the propylene-based polymer. Further, it may be a PP resin, which includes a copolymer of propylene and a monomer (a monomer including a functional group) that includes another functional group in addition to the polymerizable functional group, or a PP resin in which such a monomer having a functional group is copolymerized with the propylene-based polymer.

Further, the above-mentioned PE resin may be a variety of polymers (ethylene-based polymers) that include ethylene as the main component. The PE resin also may be substantially comprised of one or two or more types of ethylene-based polymers. The above-mentioned ethylene-based polymer may be a homopolymer of ethylene, or another $\alpha$-olefin may be copolymerized with ethylene as the main monomer (random copolymer, block copolymer, etc.). An $\alpha$-olefin having 3~10 carbon atoms, such as propylene, 1-butene (including branched 1-butene), 1-hexene, 4-methyl-1-pentene, 1-octene, etc., can be given as preferred examples of the above-mentioned $\alpha$-olefin. Further, a PE resin including a copolymer of ethylene and a monomer (monomer including a functional group), which has another functional group in addition to the polymerizable functional group, and a PE resin obtained by copolymerizing the monomer including a functional group with an ethylene polymer, may be used. For example, an ethylene-vinyl acetate copolymer (EVA), an ethylene-acrylic acid copolymer (EAA), an ethylene-methacrylic acid copolymer (EMAA), an ethylene-methyl acrylate copolymer (EMA), an ethylene-ethyl acrylate copolymer (EEA), an ethylene-methyl methacrylate copolymer (EMMA), an ethylene(meth)acrylic acid (i.e. acrylic acid and/or methacrylic acid) copolymer cross-linked with a metal ion, etc., can be mentioned as the copolymer of ethylene and a monomer that includes a functional group.

Although the density of the PE resin is not particularly limited, it can be, for example, approximately 0.90~0.94 g/cm$^3$. Low density polyethylene (LDPE) and linear low density polyethylene (LLDPE) can be given as examples of preferred PE resins. The PE resin may include one or two or more types of LDPE, and one or two or more types of LLDPE. Although the blending ratio of each of the LDPE or LLDPE, as well as the blending ratio of the LDPE and LLDPE, are not particularly limited, it can be suitably set so that the PE resin exhibits the desired properties.

Although not particularly limited, a resin material having an MFR (melt flow rate) of approximately 0.5~80g/10 min (e.g., 0.5~10g/10 min) can be preferably used as the resin material that comprises the support substrate. Herein, MFR means a value obtained by measuring in conformance with JIS K7210 using method A at a temperature of 230°C and a load of 21.18 N. The above-mentioned resin material can be a polyolefin-based resin having an MFR in the above-mentioned range (e.g., PP resin, PE resin, a blended resin of PP resin and PE resin, etc.).

The resin sheet (preferably, a polyolefin-based resin sheet) used as the substrate for the paint film-protecting sheet disclosed herein can contain, as necessary, suitable compounds, which are allowed to be included in the substrate, depending upon the required properties, such as light blocking properties, weather resistance properties, heat resistance properties, film stability properties, pressure-sensitive adhesive properties, etc. For example, additives such as pigment(s) (typically, inorganic pigment(s)), filler(s), antioxidant(s), photostabilizer(s) (having a meaning that includes radical scavenging agents, UV absorbents, etc.), slip agent(s), and anti-blocking agent(s) can be admixed in a suitable manner. Inorganic powers, such as titanium oxide, zinc oxide and calcium carbonate, can be mentioned as examples of materials that may be advantageously used as the pigment(s) or filler(s). The amount of the inorganic pigment(s) or filler(s) can be appropriately set by taking into consideration the level of effect to be obtained by the additive, the molding properties of the substrate, which depend on the resin sheet molding method (extrusion molding, cast molding, etc.), etc. It is usually preferred that the amount (in case a plurality of types of additives are used, the total combined amount thereof) is about 2~20 parts by weight (more preferably about 5~15 parts by weight) per 100 parts by weight of the resin composition. The amount of each additive can be the same as the usual amount in the field of resin sheets that are used as support substrates for paint film-protecting sheets (e.g., automobile paint film-protecting sheets).

The resin sheet (preferably, a polyolefin-based resin sheet) can be manufactured by suitably using typical well-known conventional film molding methods. For example, a method preferably can be used that extrusion molds a molding material, which includes the above-mentioned resin component(s) (preferably resin component(s) that include a PP resin alone or a PP resin as the main component and a PE resin as a secondary component) and (an) additive(s) that is/are suitably admixed, as necessary.

The surface 1A of the support substrate 1 (typically, a resin sheet) shown in Fig. 1, on which the pressure-sensitive adhesive layer 2 will be provided, may be subjected to a surface treatment, such as an acid treatment, corona discharge treatment, ultraviolet radiation treatment, plasma treatment, etc. Further, the surface (back surface) 1B of the support substrate 1, on the side opposite where the pressure-sensitive adhesive layer 2 will be provided, may be subjected, if necessary, to a release treatment (for example, a treatment in which a standard silicone-based release agent, a long-chain alkyl-based release agent, or a fluorine-based release agent is applied in a thin film, typically having a thickness of about 0.01 $\mu$m ~ 0.1 $\mu$m). The effect obtained by this release treatment is that a paint film-protecting sheet 1, which has been wound into a roll, can be easily unwound.

Although the thickness of the support substrate is not particularly limited, it can be appropriately selected in accordance with its purpose. Normally, a suitable thickness for the substrate is about 300 $\mu$m or less (e.g., about 10 $\mu$m ~ 200 $\mu$m). In a preferred embodiment of the paint film-protecting sheet disclosed herein, the thickness of the substrate is about 10 $\mu$m ~ 100 $\mu$m (for example, about 20 $\mu$m ~ 60 $\mu$m). A paint film-protecting sheet that utilizes a substrate having such a thickness is suitable as an automobile paint film-protecting sheet.

The pressure-sensitive adhesive layer provided on the paint film-protecting sheet disclosed herein may be a pressure-sensitive adhesive layer that includes one or two or more types of pressure-sensitive adhesives selected from various well-known pressure-sensitive adhesives, such as rubber-based, acrylic, polyester-based, urethane-based, polyether-based, silicone-based, polyamide-based, fluorine-based, poly $\alpha$-olefin-based, ethylene-vinyl acetate copolymer-based, etc. In a preferred embodiment, the above-mentioned pressure-sensitive adhesive layer is a rubber-based pressure-sensitive adhesive layer formed from a pressure-sensitive adhesive compound that has a rubber-based polymer as the base polymer (the main component amongst the polymer components). As examples of the above-mentioned base polymer, a variety of rubber-based polymers can be mentioned, such as natural rubber; styrene butadiene rubber (SBR); polyisoprene; butane-based polymers in which the main monomer is butene (having a meaning that includes 1-butene, cis- or trans-2-butene, and 2-methylpropene (isobutylene)); A-B-A type block copolymer rubber and hydrides thereof, e.g., styrene-butadiene-styrene block copolymer rubber (SBS), styrene-isoprene-styrene block copolymer rubber (SIS), styrene-vinyl isoprene-styrene block copolymer rubber (SVIS), styrene-ethylene-butylene-styrene block copolymer rubber (SEBS), which is a hydride of SBS, styrene-ethylene-propylene-styrene block copolymer rubber (SEPS), which is a hydride of SIS, etc. Isobutylene-based polymers, such as polyisobutylene, isobutylene-isoprene copolymer, etc., can be mentioned as suitable examples of the above-mentioned butene-based polymers.

The techniques disclosed herein may be preferably applied to a paint film-protecting sheet comprised of a pressure-sensitive adhesive layer made from a non-crosslinked-type of pressure-sensitive adhesive. Herein, the pressure-sensitive adhesive layer comprised of a non-crosslinked type of pressure-sensitive adhesive means a pressure-sensitive adhesive layer in which a deliberate treatment for the purpose of forming chemical bonds between the polymers that constitute the pressure-sensitive adhesive (i.e. a crosslinking treatment, e.g., admixing a crosslinking agent, etc.) is not performed when forming the pressure-sensitive adhesive layer. Such a pressure-sensitive adhesive layer has suitable properties as a pressure-sensitive adhesive layer for a paint film-protecting sheet, in that adhesion marks will rarely remain on the paint film because strain does not substantially accumulate (strain can be easily dissipated even if it temporarily generated).

As the non-crosslinked type of pressure-sensitive adhesive, pressure-sensitive adhesives can be given as examples that have the above-mentioned A-B-A type block copolymer rubber or hydrides thereof as the base polymer, an isobutylene-based polymer as the base polymer, etc. Amongst these, a pressure-sensitive adhesive layer is preferred that is made from a non-crosslinked pressure-sensitive adhesive (a polyisobutylene-based pressure-sensitive adhesive) that is formed from a pressure-sensitive adhesive composition having an isobutylene-based polymer as the base polymer. Because there is a large difference in the solubility parameters (SP values) between a polyisobutylene-based pressure-sensitive adhesive and a paint film (e.g., a paint film for automotive use), material transfer between the two will rarely occur, and adhesion marks will rarely occur on the paint film. Further, such a pressure-sensitive adhesive layer has a high elastic modulus, and thus is preferred as a pressure-sensitive adhesive (re-peelable pressure-sensitive adhesive) for use in a pressure-sensitive adhesive sheet that is re-peelable, such as a paint film-protecting sheet.

The above-mentioned isobutylene-based polymer may be a homopolymer of isobutylene (homopolyisobutylene), or may be a copolymer in which isobutylene is the main monomer (in other words, a copolymer in which isobutylene has been copolymerized at a ratio exceeding 50 mol%). The copolymer can be, for example, a copolymer of isobutylene and normal butylene or a copolymer of isobutylene and isoprene (for example, butyl rubbers such as regular butyl rubber, chlorinated butyl rubber, brominated butyl rubber and partially cross-linked butyl rubber, etc.), and vulcanized products or modified products thereof (for example, copolymers modified with (a) functional group(s) such as hydroxyl group(s), carboxyl group(s), amino group(s), epoxy group(s), etc.). From the standpoint of stability of the adhesive strength (for example, a property that the adhesive strength does not excessively increase due to aging or its thermal history), homopolyisobutylene and isobutylene-normal butylene copolymer can be mentioned as examples of isobutylene-based polymers that can be preferably used. Among them, homopolyisobutylene is preferred.

The pressure-sensitive adhesive in the technology disclosed herein preferably has an Mw of $65 \times 10^4$ ~ $120 \times 10^4$ (e.g., $65 \times 10^4$ ~ $90 \times 10^4$) and an Mn of $10 \times 10^4$ ~ $25 \times 10^4$ (e.g., $10 \times 10^4$ ~ $20 \times 10^4$). A pressure-sensitive adhesive that satisfies these average molecular weights (Mw, Mn) can exhibit both a high cohesive strength and an adhesive strength that is suitable for a paint film-protecting sheet. Thus, a paint film-protecting sheet having such a pressure-sensitive adhesive can exhibit good adhesive residue prevention properties to surfaces, such as re-polished surfaces, etc., that are prone to adhesive residues. If Mw or Mn is greater than the above-mentioned ranges, the solution viscosity of the pressure-sensitive adhesive tends to be too high and thus the handling properties of the pressure-sensitive adhesive (e.g., coating stability properties) degrade. If Mw or Mn is less than the above-mentioned ranges, the cohesive strength of the pressure-sensitive adhesive may be insufficient, and adhesive residue will be easily produced in case it is used in rigorous conditions (e.g., in case it is adhered to a re-polished surface).

Note that the Mw and Mn of the pressure-sensitive adhesive herein means the value based on standard polystyrene obtained by performing gel permeation chromatography (GPC) on a sample prepared by dissolving the pressure-sensitive adhesive extracted from a paint film-protecting sheet in tetrahydrofuran (THF). Specifically, the Mw and Mn of the pressure-sensitive adhesive can be obtained by performing a GPC measurement according to the description of the method in the examples mentioned below.

In a preferred embodiment, the polydispersivity index (Mw/Mn) of the pressure-sensitive adhesive is 3.5 or greater, and more preferably 5 or greater (typically, Mw/Mn $\geq$ 5.0, e.g., Mw/Mn > 5.0). A paint film-protecting sheet comprised of such a pressure-sensitive adhesive can achieve an even higher level of adhesive residue prevention properties. Further, although there is generally a tendency that the solution viscosity of a pressure-sensitive adhesive increases as the Mw of the pressure-sensitive adhesive becomes larger, a pressure-sensitive adhesive having a solution viscosity that is comparatively low for the Mw can be made by making the polydispersivity index equal to or greater than the above-noted prescribed value. This is useful from the standpoint of the handling properties of the pressure-sensitive adhesive compound (e.g., the ease of handling of the pressure-sensitive adhesive compound during preparation, fluid-transfer, coating, etc.). Thus, a pressure-sensitive adhesive disclosed herein that satisfies the preferred Mw, Mn and the polydispersivity index can provide a high cohesive strength, an adhesive strength that is suitable for a paint film-protecting sheet, and good handling properties. The polydispersivity index of the pressure-sensitive adhesive may be 5.0 or higher, 5.5 or higher, or 6.0 or higher. Although the polydispersivity index of the pressure-sensitive adhesive is not particularly limited, it is preferably 7.5 or less (e.g., 7.0 or less).

The pressure-sensitive adhesive in the technology disclosed herein has a viscosity in a 10 wt% toluene solution at 30°C that is preferably 10 mPa·s or less, more preferably 5 mPa·s or less (e.g., less than 5.0 mPa·s), and even more preferably 1.5 mPa·s or less. Such a pressure-sensitive adhesive had good handling properties because the solution viscosity is comparatively low for the concentration of the non-volatiles (NV). This is preferred from the standpoint of improving the manufacturability of the paint film-protecting sheet and reducing the amount of solvent used. Although the lower limit of the viscosity is not particularly limited, it is preferably 0.2 mPa·s or greater (e.g., 0.4 mPa·s or greater). Note that although a 10 wt% toluene solution of the pressure-sensitive adhesive is provided as a reference for the solution viscosity of the pressure-sensitive adhesive, the NV of the pressure-sensitive adhesive composition used during the manufacture of the paint film-protecting sheet (in particular, during the formation of the pressure-sensitive adhesive layer) is not limited to 10 wt%, and can be any NV considered to be suitable for coating stability, manufacturability, etc. (e.g., 5~30 wt%, preferably 10~25 wt%). Further, the solvent that is comprised in the pressure-sensitive adhesive composition is also not limited to toluene, as various solvents (typically, organic solvents) can be used alone, or can be mixed together in suitable ratios. Toluene, heptane, hexane, ethyl acetate, etc., can be mentioned as suitable examples of organic solvents that can be used in the pressure-sensitive adhesive composition.

The base polymer of the pressure-sensitive adhesive (e.g., an isobutylene-based polymer, typically, polyisobutylene) is preferably a mixture of two or more types of polymers having different molecular weight distributions. Herein, "different molecular weight distributions" means that the positions and/or the shapes of the elution peaks in the GPC measurement are different. With a pressure-sensitive adhesive having such a composition, by choosing the above-mentioned two or more polymers and the mixing ratio thereof, the Mw and Mn of the pressure-sensitive adhesive can be easily adjusted into the prescribed ranges, and at least one (preferably both) of the polydispersivity index and the viscosity of the pressure-sensitive adhesive can be easily adjusted into the preferred range(s) disclosed herein. It is particularly preferred that two or more polymers having different Mw are admixed as the base polymer. The fact that two or more polymers having different Mw have been admixed can be determined, for example, by observing a molecular weight distribution exhibiting two or more elution peaks that differ in the positions of the peaks in the GPC measurement (in other words, bimodal (two peak property) or greater). Note that each of the above-mentioned two or more polymers typically exhibits a unimodal (single peak property) molecular weight distribution.

As the above-mentioned two or more types of polymers having different Mw, polymers having an Mw in the range of $1 \times 10^4 \sim 130 \times 10^4$, for example, can be utilized in suitable combinations. The above-mentioned two or more polymers are preferably combined so that the Mw of the polymer having the highest molecular weight differs from the Mw of the polymer having the lowest molecular weight by 5 times or more (e.g., about 5 to 20 times, typically about 8 to 12 times). The polydispersivity index of each polymer is, for example, preferably 1.5 or greater (more preferably 2.0 or greater, for example 2.0 to 5.0).

In a preferred embodiment, at least one type of a high molecular weight polymer $P_H$ having an Mw in the range of $70 \times 10^4 \sim 130 \times 10^4$ (preferably $70 \times 10^4 \sim 120 \times 10^4$, e.g., $70 \times 10^4 \sim 100 \times 10^4$) and at least one type of a low molecular weight polymer $P_L$ having an Mw in the range of $3 \times 10^4 \sim 20 \times 10^4$ (typically $4 \times 10^4 \sim 10 \times 10^4$) are utilized in combination as the base polymer. The polydispersivity index preferably can be 2.0 to 5.0 (e.g., greater than 2.0 and less than 5.0) for the above-mentioned high molecular weight $P_H$. The polydispersivity index preferably can be 1.5 to 3.5 for the above-mentioned low molecular weight polymer $P_L$. A polymer having an Mw between the $P_H$ and the $P_L$ also may be admixed in the base polymer. The total amount of $P_H$ and $P_L$ is preferably 70 wt% or more of the entire base polymer. The base polymer may also be a pressure-sensitive adhesive that is made essentially from $P_H$ and $P_L$.

The mixing ratio of the above-mentioned two or more types of polymers can be suitably set so as to achieve one or both of the preferred molecular weight distribution(s) (Mw and Mn, preferably also the polydispersivity index) and the viscosity disclosed herein. For example, the pressure-sensitive adhesive preferably contains $P_H$ and $P_L$ in a weight ratio of 95/5 to 50/50. In order to achieve even better adhesive residue prevention properties, $P_H$ preferably accounts for 60 wt% or more of the entire base polymer (typically, 60~95 wt%). The base polymer of the pressure-sensitive adhesive in the technology disclosed herein may be made from at least one type of $P_H$ and at least one type of $P_L$. In a preferred embodiment, both of $P_H$ and $P_L$ are an isobutylene-based polymer (typically, polyisobutylene).

The above-mentioned pressure-sensitive adhesive can include a tackifier, if necessary. A paint film-protecting sheet comprising a pressure-sensitive adhesive having such a composition can exhibit an even more suitable adhesive strength, even to low adhesion paint films. Thus, an even more highly-versatile paint film-protecting sheet can be obtained. For example, a paint film-protecting sheet can be obtained that preferably can be used to protect a wider variety of paint films. One or two or more types selected, for example, from terpene-based resins, rosin-based resins, alkylphenol resins, alkyd resins, etc., can be used as the tackifier. Note that herein "low adhesion paint film" means, for example, a paint film in which the contact angle of n-hexadecane relative to the paint film surface is 15 degrees or greater. The above-mentioned contact angle is obtained by holding the paint film horizontally, dripping about 2 $\mu$L of a droplet of n-hexadecane onto the paint film in a 65% RH environment at 23°C, and then, within 1 minute of the fall of the droplet, measuring the angle between a line tangent to an edge portion of the droplet and the paint film surface.

Phenol-based compounds having an SP value of 8.5 (units $[(cal/cm^3)^{1/2}]$. The same below.) or greater (typically, 8.5~15), amine-based compounds having an SP value of 8.5 or greater (typically, 8.5~15), and the rosin-family can be mentioned as particularly suitable examples of the tackifier used in the pressure-sensitive adhesive disclosed herein (e.g., a polyisobutylene-based adhesive). With such a tackifier, the pressure-sensitive adhesive properties (e.g., the pressure-sensitive adhesive strength to low adhesion paint films) can be effectively improved by adding a small amount (e.g., 0.01~5 parts by weight to 100 parts by weight of the base polymer of the pressure-sensitive adhesive, preferably 0.01~1 parts by weight). In case the base polymer is a polyisobutylene-based polymer, the improved results of the above-mentioned pressure-sensitive adhesive properties can be exhibited particularly well. Such tackifiers can be used alone or in suitable combinations.

Hindered-type compounds are preferably used as the above-mentioned phenol-based compounds and the above-mentioned amine-based compounds. Phenol resins, alkylphenol resins (e.g., alkylphenol resins having an alkyl side chain with 3 or more carbon atoms, such as tert-butylphenol resin, tert-amylphenol resin, and tert-octylphenol resin), rosin-modified phenol-based resins, and terpene-modified phenol resins can be mentioned as suitable examples of the above-mentioned phenol-based compounds. Rosin (in particular, a rosin having an SP value of 8.5 or greater) preferably can be used as the rosin-family.

Note that the SP value herein indicates the solubility of a compound, and is a value calculated from the basic structure of the compound using the method proposed by Fedors. Specifically, the SP value is calculated from the evaporation energy $\Delta e$ (cal) at 25°C and the mole volume $\Delta v$ (cm$^3$) of each atom or group of atoms at the same temperature.

$$\text{SP value } (\delta) = (\Sigma \Delta e / \Sigma \Delta v)^{1/2}$$

(Reference document: Hideki Yamamoto, "SP value fundamentals, application, and calculation method", 4th edition, Johokiko Publishing, April 3, 2006, pp. 66-67).

Product name "Durez 19900" of Sumitomo Durez Co., Ltd., and product names "Irganox 1010", "Irganox 1330", "Irganox 3114", "Irganox 565", and "Irganox 5057" of Japan Ciba Geigy, etc., are examples of commercially-available phenol-based compounds having an SP value of 8.5 or greater. Product name "Chimassorb 944" and "Tinuvin 770" of Japan Ciba Geigy are examples of commercially-available amine-based compounds having an SP value of 8.5 or greater.

Phenol-based compounds and amine-based compounds having the above-mentioned SP values are added to pressure-sensitive adhesives in which the base polymer is a rubber-based polymer, in particular an isobutylene-based polymer (polyisobutylene, butyl rubber, etc.), a hydrogenated styrene·diene type block copolymer (e.g., an A-B-A type rubber block copolymer, such as styrene·butadiene·styrene that has been hydrogenated, etc.), etc., and are thought to contribute to the improvement of the adhesion to low adhesion paint films by forming a particular miscible state that is localized in the vicinity of the interface between the hydrogenated pressure-sensitive adhesive and the adherend (paint film). From the standpoint of improving the formability of the above-mentioned miscible state, the adhesive strength, etc., it is preferable to usually utilize a tackifier having a weight-average molecular weight of 300 or greater (more preferably 400 or greater, e.g., 500 or greater). Furthermore, a tackifier is preferred that has a weight-average molecular weight of $3 \times 10^4$ or less.

Phenol-based compounds and amine-based compounds having an SP value of 9.5 or greater (typically, 9.5~15) can be mentioned as suitable examples of tackifiers that can be utilized in the pressure-sensitive adhesives in the technology disclosed herein. For example, the phenol-based compounds having an SP value of 9.5 or greater and the amine-based compounds having an SP value of 9.5 or greater, which are disclosed in Patent Publication No. H9-3420, can be used alone or in suitable combinations.

In case the pressure-sensitive adhesive includes a tackifier, the amount thereof can be, e.g., 50 parts by weight or less to 100 parts by weight of the base polymer (preferably, 30 parts by weight or less, more preferably 15 parts by weight or less, typically 0.01 part by weight or greater). From the standpoint of preventing adhesive residue and contamination of the adherend to a high degree, usually the amount of tackifier is preferably 0.01~5 parts by weight to 100 parts by weight of the base polymer, and more preferably 0.01~2 parts by weight (typically 0.05~1 part by weight, e.g., 0.1~1 part by weight).

The pressure-sensitive adhesive that can be used in the paint film pressure-sensitive adhesive sheet disclosed herein can be admixed, if necessary, with suitable compounds (additives) that are permitted to be included in the pressure-sensitive adhesive. Softeners, release agents, pigments, fillers, anti-oxidants, photostabilizers (having a meaning that includes radical scavengers, ultraviolet adsorbing agents, etc.), etc., can be mentioned as examples of such additives. Low molecular weight rubber-based materials, process oils (typically, paraffin-based oils), petroleum-based softeners, epoxy-based compounds, etc., can be mentioned as examples of the softeners. Silicone-based release agents, paraffin-based release agents, polyethylene wax, acryl polymers, etc., can be mentioned as examples of the release agents. The amount of release agent used can be about 0.01~5 parts by weight to 100 parts by weight of the base polymer. In the alternative, a pressure-sensitive adhesive composition is also possible in which such a release agent is not added. Inorganic powders such as titanium oxide, zinc oxide, calcium oxide, magnesium oxide, silica, etc., can be mentioned as examples of the pigments and fillers. These types of additives can each be used alone or in combinations of two or more. The amount of each additive can be the same as the standard amount used in the pressure-sensitive adhesive field for paint film-protecting sheets (for example, automobile paint film-protecting sheets). The total amount of the above-mentioned tackifier and additive(s) is preferably 30 parts by weight or less per 100 parts by weight of the base polymer (more preferably, 15 parts by weight or less).

In a preferred embodiment, components of the above-mentioned pressure-sensitive adhesive having a molecular weight of 2000 or less are 5 parts by weight or less per 100 parts by weight of the base polymer included in the pressure-sensitive adhesive. A paint film-protecting sheet comprising a pressure-sensitive adhesive, which keeps down the amount of low molecular weight components in this way, can better prevent contamination of the paint film, adhesive residue, etc. On the other hand, by including a moderate amount in the pressure-sensitive adhesive, the low molecular weight components can improve the pressure-sensitive adhesive performance (e.g., the pressure-sensitive adhesive strength to low adhesion paint films described below). Thus, the pressure-sensitive adhesive of the paint film-protecting sheet disclosed herein preferably contains, for example, about 0.01~5 parts by weight (preferably, 0.1~5 parts by weight) of (a) component(s) having a molecular weight of 2000 or less.

Further, the component(s) having a molecular weight of $3 \times 10^4$ or less within the above-mentioned pressure-sensitive adhesive is (are) preferably 30 parts by weight or less per 100 parts by weight of the base polymer included in the pressure-sensitive adhesive, more preferably 15 parts by weight or less. A paint film-protecting sheet comprising such a pressure-sensitive adhesive can exhibit better adhesive residue prevention properties. Note that the amount of the component(s) having a molecular weight of 2000 or less and the amount of the component(s) having a molecular weight of $3 \times 10^4$ or less can be determined by GPC measurement of the pressure-sensitive adhesive.

The thickness of the pressure-sensitive adhesive layer is not particularly limited and can be appropriately determined according to the objective. Normally, about 100 μm or less (e.g., 2 μm ~ 100 μm) is adequate, preferably about 3 μm ~ 30 μm, and more preferably about 5 μm ~ 20 μm. For example, the pressure-sensitive adhesive layer provided on an automotive paint film-protecting sheet can preferably have a thickness that is in the above-mentioned range.

The formation of the pressure-sensitive adhesive layer can be carried out in accordance with known methods for forming a pressure-sensitive adhesive layer on a pressure-sensitive adhesive sheet. For example, a method (direct contact method) can be preferably employed that forms the pressure-sensitive adhesive layer by directly distributing (typically, applying) a pressure-sensitive adhesive composition, which is dissolved or dispersed in an appropriate solvent forming a pressure-sensitive adhesive layer formation material that is admixed, if necessary, with an additive(s) and a polymer component(s), onto a support substrate and then drying. Further, a method (transfer method) may also be employed that distributes the above-mentioned pressure-sensitive adhesive compound onto a surface having good peeling properties (e.g., a surface of a release liner, the rear surface of a support substrate that has been release-treated, etc.), dries it to form a pressure-sensitive adhesive layer on the surface, and then transfers this pressure-sensitive adhesive layer onto the support substrate. While the pressure-sensitive adhesive layer is typically formed in a continuous manner, it may be formed in regular or random patterns of dots, stripes, etc., depending on the purpose and use.

In the adhesive residue test performed under the conditions noted in the examples below, the paint film-protecting sheets disclosed herein did not generate adhesive residues (residue was not visually observed). Further, the standard paint film pressure-sensitive adhesive strength measured using the method disclosed in the examples below was 2~10N/25 mm (preferably, 5~10N/25 mm). Further, the low adhesion paint film pressure-sensitive adhesive strength measured using the method disclosed in the examples below was 1~10N/25 mm (preferably, 2~10N/25 mm, e.g., 2~5N/25 mm). A paint film-protecting sheet that satisfies one or two or more of the above-mentioned three properties (adhesive residue, standard paint film pressure-sensitive adhesive strength, low adhesion paint film pressure-sensitive adhesive strength) is preferred, and a paint film-protecting sheet that satisfies all three of these properties is particularly preferred.

Although it is not necessary to disclose the reason(s) that the objects of the present application are achieved by carrying out the present invention with the above-described composition, for example, the following points can be considered. Namely, to improve the adhesive residue prevention properties of a paint film-protecting sheet, it is desirable to increase the cohesive strength of the pressure-sensitive adhesive. In order to increase the cohesive strength in a non-crosslinked pressure-sensitive adhesive, a higher average molecular weight of the pressure-sensitive adhesive is better. However, if the base polymer is simply replaced with one having a higher Mw, other properties (e.g., pressure-sensitive adhesive strength) will diminish, even though the cohesive strength increases, and thus the ability of the paint film-protecting sheet to adhere and protect may be impaired. For example, a phenomenon can occur in which the paint film-protecting sheet peels away from the paint film during transportation in low temperatures, etc., due to insufficient pressure-sensitive adhesive strength. Although it is conceivable to increase the pressure-sensitive adhesive strength by increasing the amount of the low molecular weight additive(s), such as a tackifier and a softener, while also increasing the Mw of the base polymer, a pressure-sensitive adhesive that contains a large quantity of low molecular weight component(s) in this manner is disadvantageous in terms of adhesive residue prevention in that it readily generates contamination of the paint film. In the present invention, it is conceivable that both the adhesive residue prevention properties and other pressure-sensitive adhesive properties (in particular, pressure-sensitive adhesive strength) can be achieved at a high level by focusing on the overall average molecular weight of the pressure-sensitive adhesive, rather than only on the average molecular weight of the base polymer, and by setting both the Mw and Mn of the pressure-sensitive adhesive (preferably, Mw/Mn as well) in the prescribed ranges.

Although several examples relating to the present invention will be described below, the present invention is not intended to be limited to these examples. In the explanation below, "parts" and "%" are based on weight unless specifically stated otherwise.

<Example 1>

A support molding material containing 38 parts of propylene homopolymer (Japan Polypropylene Corp. product, product name "Novatec PP FY4"), 70 parts of ethylene-propylene block copolymer (Japan Polypropylene Corp. product, product name "Novatec PP BC3F"), 20 parts of linear low-density polyethylene (LLDPE) (Japan Polyethylene Corp. product, product name "Kernel KF380"), 10 parts of rutile-type titanium dioxide (Ishihara Sangyo Kaisha, Ltd. product, product name "TIPAQUE CR-95") was melt kneaded in a film-forming machine and extruded from a T-die in order to mold a PP resin film (support substrate) having a thickness of 40 μm. A release treatment was performed by coating a long chain alkyl-based release agent on the rear surface side of this substrate (the side opposite of the side on which the pressure-sensitive adhesive layer will be provided) so that the thickness thereof after drying would be about 0.05 μm, to thereby obtain a support substrate.

100 parts of an isobutylene-based polymer as the base polymer and 0.2 parts of a tackifier were dissolved in toluene and a pressure-sensitive adhesive solution having 12% NV was prepared. As the isobutylene-based polymer, two types were used in a 90:10 weight ratio, a polyisobutylene of BASF, product name "Oppanol B-80" (Mw about $90 \times 10^4$, Mn about $25 \times 10^4$, Mw/Mn about 3.6), and a polyisobutylene of the same company, product name "Oppanol B12SFN" (Mw about $7 \times 10^4$, Mn about $2.6 \times 10^4$, Mw/Mn about 2.7). As the tackifier, a p-tert-octylphenol resin of Sumitomo Durez Co., Ltd., product name "Durez 19900" (weight-average molecular weight 1300, SP value 11.2), was used. This pressure-sensitive adhesive solution was coated onto one surface of the support substrate (the surface on the side that was not release-treated) and dried to form a pressure-sensitive adhesive layer having a thickness of 10 μm. The pressure-sensitive adhesive sheet sample of Example 1 was manufactured in this manner.

<Example 2>

In the present example, Oppanol B-80 and Oppanol B12SFN were used in a weight ratio of 75:25 as the isobutylene-based polymer acting as the base polymer. In all other respects, the pressure-sensitive adhesive sheet sample was manufactured in the same manner as in Example 1.

<Example 3>

In the present example, two types of polyisobutylenes of BASF, product names "Oppanol B-100" (Mw about $130 \times 10^4$, Mn about $30 \times 10^4$, Mw/Mn about 4.3) and "Oppanol B12SFN", were used in a weight ratio of 75:25 as the isobutylene-based polymer acting as the base polymer. In all other respects, the pressure-sensitive adhesive sheet sample was manufactured in the same manner as in Example 1.

<Example 4>

In the present example, three types of polyisobutylenes of BASF, product names Oppanol B80, "Oppanol B-50" (Mw about $45 \times 10^4$, Mn about $15 \times 10^4$, Mw/Mn about 3.0) and Oppanol B-12SFN, were used in a weight ratio of 70:20:10 as the isobutylene-based polymer acting as the base polymer. In all other respects, the pressure-sensitive adhesive sheet sample was manufactured in the same manner as in Example 1.

<Example 5>

In the present example, two types of polyisobutylenes of BASF, product names Oppanol B80 and "Oppanol B-15SFN" (Mw about $9 \times 10^4$, Mn about $3.0 \times 10^4$, Mw/Mn about 3.0), were used in a weight ratio of 75:25 as the isobutylene-based polymer acting as the base polymer. In all other respects, the pressure-sensitive adhesive sheet sample was manufactured in the same manner as in Example 1.

<Example 6>

In the present example, Oppanol B-80 was used alone as the isobutylene-based polymer acting as the base polymer. In all other respects, the pressure-sensitive adhesive sheet sample was manufactured in the same manner as in Example 1.

<Example 7>

In the present example, a rosin of Arakawa Chemical, product name "Pinecrystal KR-85" (weight-average molecular weight 300, SP value 9 or greater), was used as the tackifier at 1 part per 100 parts of the base polymer. In all other respects, the pressure-sensitive adhesive sheet sample was manufactured in the same manner as in Example 5.

<Example 8>

In the present example, a hindered amine-based compound of BASF, product name "Tinuvin 770" (molecular weight 481, SP value 9.6), was used as the tackifier at 0.1 part per 100 parts of the base polymer. In all other respects, the pressure-sensitive adhesive sheet sample was manufactured in the same manner as in Example 5.

<Example 9>

A pressure-sensitive adhesive sheet sample was manufactured in the same manner as in Example 5, except that a tackifier was not used.

<Example 10>

In the present example, Oppanol B-100 was used alone as the isobutylene-based polymer acting as the base polymer. In all other respects, the pressure-sensitive adhesive sheet sample was manufactured in the same manner as in Example 1.

<Example 11>

In the present example, Oppanol B-80 and Oppanol B12SFN were used in a weight ratio of 65:35 as the isobutylene-based polymer acting as the base polymer. In all other respects, the pressure-sensitive adhesive sheet sample was manufactured in the same manner as in Example 1.

<Example 12>

In the present example, Oppanol B-50 was used alone as the isobutylene-based polymer acting as the base polymer. In all other respects, the pressure-sensitive adhesive sheet sample was manufactured in the same manner as in Example 1.

<Example 13>

In the present example, Pinecrystal KR-85 was used as the tackifier at 10 parts per 100 parts of the base polymer. In all other respects, the pressure-sensitive adhesive sheet sample was manufactured in the same manner as in Example 5.

The following evaluation tests were conducted with respect to the pressure-sensitive adhesive sheet samples manufactured in Examples 1~10. The results are shown in Table 1 together with the composition of the pressure-sensitive adhesive in each row.

[Mw, Mn and polydispersivity index of the pressure-sensitive adhesives]

Pressure-sensitive adhesive was collected from the pressure-sensitive adhesive sheet samples of each example; a 1.0g/L tetrahydrofuran (THF) solution was prepared and left undisturbed for 24 hours. To determine the weight-average molecular weight (Mw) and the number-average molecular weight (Mn) based on standard polystyrene, GPC measurements were performed on each filtrate filtered from the THF solution using a membrane filter having a 0.45 $\mu$m average pore diameter under the following conditions. Tosoh Corporation, model "HLC-8120GPC" was used as the GPC measurement device. The polydispersivity index (Mw/Mn) was calculated from the Mw and Mn obtained therefrom.

GPC measurement conditions

- Sample injection amount: 20 $\mu$L
- Eluting solution: Tetrahydrofuran
- Flow velocity: 0.6 mL/min
- Column: 4 columns were used and connected in series (Tosoh Corporation, TSKgel SuperHZM-H/HZ4000/HZ3000/HZ2000), each column having an inner diameter of 6.0 mm and length of 150 mm.
- Column temperature: 40°C
- Detector: RI detector

In the above-mentioned GPC measurement, the amount of components having a molecular weight of 2000 or less was from 0.1 to 5 parts per 100 parts of the base polymer for all pressure-sensitive adhesives in Examples 1~12. The amount of components having a molecular weight of 2000 or less in the pressure-sensitive adhesive of Example 13 was greater than 5 parts (10 parts or more). Further, the amount of components having a molecular weight of 30000 or less was 15 parts or less per 100 parts of the base polymer for all pressure-sensitive adhesives in Examples 1~10 and 12. The amount of components having a molecular weight of 30000 or less in the pressure-sensitive adhesives of Examples 11 and 13 was greater than 15 parts.

[Viscosity and coating properties]

Pressure-sensitive adhesive was collected from the pressure-sensitive adhesive sheet samples of each example, and a toluene solution containing the pressure-sensitive adhesive at a concentration of 10% was prepared. After heating the toluene solution for 1 hour in a 30°C bath, viscosity was measured at 30°C with a BH-model rotating viscometer of Tokimec Corporation using a No. 2 rotor at 10 rpm. As a result thereof, coating properties were assessed as good (○) when the viscosity was 5 mPa·s or less, excellent (◎) when the viscosity was 1.5 mPa·s or less, and poor (×) when the viscosity exceeded 5 mPa·s.

[Adhesive residue properties]

To deliberately create a surface state that readily generates adhesive residues, a paint film surface was formed by coating an alkyd melamine-based paint (Kansai Paint Co., Ltd. product, product name "TM13RC") onto a 45cm × 30 cm steel plate, and polishing for 3 minutes at 1000 rpm using an electric polisher (Makita Corporation product, model "PV7001C") equipped with a wool buff (Hitachi Koki Co., Ltd. product, product name "959-721") and using a polishing agent (Sumitomo 3M Ltd. product, product name "Hard 5982-1-L"). Thereafter, the polishing agent was removed from the surface using a finishing cloth to produce an adherend. The above-mentioned operation was performed in a standard environment of temperature 23°C and humidity 50% RH.

A pressure-sensitive adhesive sheet of each example was cut into strips having a width of 50 mm and a length of 100 mm (corresponding to the direction in which the pressure-sensitive adhesive compound was coated, i.e., the direction in which the substrate was extruded) in order to prepare test specimens. The test specimens were press-bonded onto the above-mentioned adherends and then maintained for 96 hours in the above-mentioned standard environment; after maintaining for 4 hours in a 0°C environment that readily generates adhesive residues, the person in charge of the test then pulled the test specimens from the adherends by hand at a peeling angle of about 90 degrees and a peeling speed of about 100 mm/minute while in the same environment. The paint film surface after peeling was visually inspected and the results were assessed as follows:

○: residue could not be visually observed.
×: residue could be visually observed.

[Pressure-sensitive adhesive strength to SUS]

A pressure-sensitive adhesive sheet of each example was cut into strips having a width of 25 mm and a length of 100 mm (corresponding to the direction in which the pressure-sensitive adhesive compound was coated, i.e., the direction in which the substrate was extruded) in order to prepare test specimens. SUS plates (SUS 430BA plates were used) were soaked in toluene and ultrasonically cleaned for 30 minutes, and the test specimens were adhered to the SUS plates in a standard environment of 23°C and 50% RH. The test specimens were press-bonded by reciprocally moving a 2 kg rubber roller conforming to JIS Z 0237:2000 at a speed of 3 m/min. After being adhered, the test specimens were held for 30 minutes in the above-mentioned standard atmosphere, and the peeling strength [N/25 mm] was measured at a peeling speed (crosshead speed) of 300 mm/min and a peeling angle of 180 degrees by using an Autograph AG-10G model tensile testing machine of Shimazu Corp. The measurements were performed three times and average values are shown as the SUS pressure-sensitive adhesive strengths in Table 1.

[Pressure-sensitive adhesive strength to standard paint film]

A pressure-sensitive adhesive sheet of each example was cut into strips having a width of 25 mm and a length of 100 mm (the lengthwise direction is the MD direction) in order to prepare test specimens. A paint film obtained by coating an acid epoxy cross-linked acrylic paint (Kansai Paint Co. Ltd. product, product name "KINO1210TW") onto a steel plate was degreased with petroleum benzene, and the above-mentioned test specimens were adhered to the paint film in the same way as in the above-mentioned pressure-sensitive adhesive strength to SUS measurement. After being adhered, the test specimens were held for 30 minutes in the above-mentioned standard environment, and the peeling strength [N/25 mm] was measured at a peeling speed (crosshead speed) of 300 mm/min and a peeling angle of 180 degrees by using the above-mentioned tensile testing machine. The measurements were performed three times and average values are shown as the standard paint film pressure-sensitive adhesive strengths in Table 1.

[Pressure-sensitive adhesive strength to low adhesion paint film]

A pressure-sensitive adhesive sheet of each example was cut into strips having a width of 25 mm and a length of 100 mm (the lengthwise direction is the MD direction) in order to prepare test specimens. The above-mentioned test specimens were adhered to a low-adhesive acryl melamine-based paint film having an n-hexadecane contact angle of 15 degrees in the same way as in the above-mentioned pressure-sensitive adhesive strength to SUS measurement. After being adhered, the test specimens were held for 30 minutes in the above-mentioned standard environment, and the peeling strength [N/25 mm] was measured at a peeling speed (crosshead speed) of 300 mm/min and a peeling angle of 180 degrees by using the above-mentioned tensile testing machine. The measurements were performed three times and average values are shown as the low adhesion paint film pressure-sensitive adhesive strengths in Table 1.

Table 1

| Sample No | 1 | 2 | 3 | 4 | 5 | 6 | 7 | 8 | 9 | 10 | 11 | 12 | 13 |
|---|---|---|---|---|---|---|---|---|---|---|---|---|---|
| Polyisobutylene (parts) B-100 | - | - | 75 | - | - | - | - | - | - | 100 | - | - | - |

(continued)

| Sample No | 1 | 2 | 3 | 4 | 5 | 6 | 7 | 8 | 9 | 10 | 11 | 12 | 13 |
|---|---|---|---|---|---|---|---|---|---|---|---|---|---|
| B-80 | 90 | 75 | - | 70 | 75 | 100 | 75 | 75 | 75 | - | 65 | - | 75 |
| B-50 | - | - | - | 20 | - | - | - | - | - | - | - | 100 | - |
| B-15SFN | - | - | - | - | 25 | - | 25 | 25 | 25 | - | - | - | 25 |
| B-12SFN | 10 | 25 | 25 | 10 | - | - | - | - | - | - | 35 | - | - |
| Tackifier (parts) | | | | | | | | | | | | | |
| DUREZ 19900 | 0.2 | 0.2 | 0.2 | 0.2 | 0.2 | 0.2 | - | - | - | 0.2 | 0.2 | 0.2 | - |
| KR-85 | - | - | - | - | - | - | 1 | - | - | - | - | - | 10 |
| TINUVIN 770 | - | - | - | - | - | - | - | 0.1 | - | - | - | - | - |
| Mw [$\times 10^4$] | 81 | 66 | 72 | 73 | 67 | 88 | 66 | 67 | 68 | 130 | 56 | 43 | 52 |
| Mn [$\times 10^4$] | 16 | 10 | 14 | 14 | 11 | 24 | 11 | 11 | 11 | 28 | 8 | 14 | 7 |
| Mw/Mn | 5.1 | 66 | 5.1 | 5.2 | 6.1 | 3.7 | 6.1 | 6.1 | 6.1 | 4.7 | 7.0 | 3.1 | 6.1 |
| Viscosity [mPa·s] | 1.4 | 0.6 | 0.8 | 0.8 | 0.7 | 2.0 | 0.7 | 0.7 | 0.7 | 12 | 0.3 | 0.4 | 0.7 |
| Coating properties | ◎ | ◎ | ◎ | ◎ | ◎ | ○ | ◎ | ◎ | ◎ | × | ◎ | ◎ | ◎ |
| Adhesive residue properties | ○ | ○ | ○ | ○ | ○ | ○ | ○ | ○ | ○ | ○ | × | × | × |
| Pressure-sensitive adhesive strength to SUS [N/25mm] | 8.4 | 8.1 | 8.4 | 7.5 | 8.4 | 8.0 | 8.0 | 8.0 | 6.5 | 7.7 | 6.8 | 6.9 | 12.0 |
| Pressure-sensitive adhesive strength to standard paint film [N/25mm] | 6.5 | 8.2 | 7.6 | 8.0 | 8.1 | 6.4 | 6.7 | 7.1 | 6.8 | 6.0 | 9.0 | 6.8 | 9.8 |
| Pressure-sensitive adhesive strength to low adhesion paint film [N/25mm] | 2.2 | 2.4 | 2.0 | 2.5 | 2.7 | 2.1 | 2.0 | 2.4 | 0.2 | 2.0 | 2.5 | 2.5 | 7.8 |

As shown in Table 1, all of samples 1~9, which comprise a pressure-sensitive adhesive layer made from a pressure-sensitive adhesive having an Mw of $65 \times 10^4 \sim 120 \times 10^4$ and an Mn of $10 \times 10^4 \sim 25 \times 10^4$, exhibited an excellent ability to prevent adhesive residue, even with respect to paint films having a surface that readily generates adhesive residues, and good coating properties, and exhibited an appropriate amount of pressure-sensitive adhesive strength (5~10N/25 mm) to SUS and standard paint films. Samples 1 to 8, which contain 0.1~5 parts of a tackifier per 100 parts of the base polymer (herein, 0.1~1 part), also exhibited satisfactory pressure-sensitive adhesive strength in practical use, even to low adhesion paint films (2~10N/25 mm). Further, samples 1 to 9, which have a polydispersivity index of the pressure-sensitive adhesive in the range of 3.5 - 7.5 and a viscosity of a 10% toluene solution that was 0.4 mPa·s ~ 5 mPa·s, exhibited satisfactory coating properties. Among these, samples 1~5 and 7~9, which have a polydispersivity index of the pressure-sensitive adhesive of 5~7 and a viscosity of 1.5 mPa·s or less, exhibited particularly good coating properties.

Samples 11 to 13, in which one or both of Mw and Mn were outside of the above-mentioned ranges, all resulted in adhesive residues in the above-mentioned adhesive residue test. With sample 10, in which Mw and Mn were too high, the solution viscosity of the pressure-sensitive adhesive was quite high, even though adhesive residue was not observed. In sample 13, which had a high content of low molecular weight compounds, the pressure-sensitive adhesive strength to SUS and low adhesion paint films was too high.

Although specific embodiments of the present teachings were described above, they are merely illustrative and do not limit the scope of claims. The technology set forth in the claims includes variations and modifications of the specific examples illustrated above.

INDUSTRIAL APPLICABILITY

The paint film-protecting sheet according to the present invention is adhered to a paint film of an object to be protected (an object having a paint film formed by the above-mentioned paint process, for example an automobile body or its parts, or a metal plate such as a steel plate or a molded product thereof) that has been subjected to a painting treatment using paints of various compositions, e.g., acrylic, polyester-based, alkyd-based, melamine-based, urethane-based, acid epoxy cross-linked-based, and combinations thereof (for example, acryl-melamine-based, alkyd-melamine-based, etc.), and is preferably used to protect the paint film from being struck by minute objects, coming into contact with chemicals, etc. In particular, it is ideal as a paint film-protecting sheet for use on automobiles (for example, for use on the outer paint film of automobile bodies) that are highly likely to be stored outdoors for long periods of time and transported to the tropics or various other regions, and which have a high level of expectation for the appearance of the paint film.

EXPLANATION OF THE REFERENCE NUMBERS

[0089]

1 : Support substrate
2 : Pressure-sensitive adhesive layer
10 : Paint film-protecting sheet

**Claims**

1.    A paint film-protecting sheet having a pressure-sensitive adhesive layer on a support substrate, wherein
the pressure-sensitive adhesive layer is comprised of a non-crosslinked pressure-sensitive adhesive,
the pressure-sensitive adhesive has a weight-average molecular weight (Mw) of $65 \times 10^4 \sim 120 \times 10^4$, and a number average molecular weight (Mn) of $10 \times 10^4 \sim 25 \times 10^4$,
wherein the polydispersivity index (Mw/Mn) of the pressure-sensitive adhesive is 5 or greater, as measured by the methods described in the description, and the base polymer of the pressure-sensitive adhesive is an isobutylene-based polymer.

2.    The paint film-protecting sheet according to claim 1, wherein the polydispersivity index (Mw/Mn) of the pressure-sensitive adhesive is 5.5 or greater.

3.    The paint film-protecting sheet according to claim 1 or 2, wherein the pressure-sensitive adhesive has a viscosity in a 10 wt% toluene solution at 30°C of 5 mPa·s or less.

4.    The paint film-protecting sheet according to any one of claims 1 to 3, wherein two or more types of polymers having different Mw are admixed in the pressure-sensitive adhesive as a base polymer.

5.    The paint film-protecting sheet according to any one of claims 1 to 4, wherein component(s) having a molecular weight of 2000 or less within the pressure-sensitive adhesive is (are) 0.1~5 parts by weight per 100 parts by weight of the base polymer of the pressure-sensitive adhesive.

6.    The paint film-protecting sheet according to any one of claims 1 to 5, wherein the pressure-sensitive adhesive includes 0.1~5 parts by weight of a tackifier per 100 parts by weight of the base polymer, and
the tackifier is one or two or more selected from:

phenol-based compounds having a solubility parameter of $8.5 \ (cal/cm^3)^{1/2}$ or greater;
amine-based compounds having a solubility parameter of $8.5 \ (cal/cm^3)^{1/2}$ or greater; and
the rosin-family.

7.    The paint film-protecting sheet according to claim 6, wherein the phenol-based compounds are one or two or more selected from phenol resins, alkylphenol resins, rosin-modified phenol-based resins, and terpene-modified phenol resins

**Patentansprüche**

1. Schutzfolie für einen Anstrichfilm, die eine Haftklebstoffschicht auf einem Trägersubstrat aufweist, wobei die Haftklebstoffschicht einen nicht-vernetzten Haftklebstoff umfasst, der Haftklebstoff ein Gewichtsmittel des Molekulargewichts (Mw) von 65 x $10^4$ ~ 120 x $10^4$ und ein Zahlenmittel des Molekulargewichts (Mn) von 10 x $10^4$ ~ 25 x $10^4$ aufweist, wobei der Polydispersitätsindex (Mw/Mn) des Haftklebstoffs 5 oder größer ist, gemessen durch die in der Beschreibung beschriebenen Verfahren, und das Basispolymer des Haftklebstoffs ein Polymer auf Isobutylenbasis ist.

2. Schutzfolie für einen Anstrichfilm gemäß Anspruch 1, wobei der Polydispersitätsindex (Mw/Mn) des Haftklebstoffs 5,5 oder größer ist.

3. Schutzfolie für einen Anstrichfilm gemäß Anspruch 1 oder 2, wobei der Haftklebstoff eine Viskosität in einer 10 Gew.-% Toluol-Lösung bei 30° C von 5 mPa·s oder weniger aufweist.

4. Schutzfolie für einen Anstrichfilm gemäß einem der Ansprüche 1 bis 3, wobei zwei oder mehr Arten von Polymeren mit unterschiedlichen Mw in dem Haftklebstoff als ein Basispolymer vermischt werden.

5. Schutzfolie für einen Anstrichfilm gemäß einem der Ansprüche 1 bis 4, wobei eine Komponente(n) mit einem Molekulargewicht von 2000 oder weniger in dem Haftklebstoff 0,1 ~ 5 Gewichtsteile pro 100 Gewichtsteile des Basispolymers des Haftklebstoffs beträgt (betragen).

6. Schutzfolie für einen Anstrichfilm gemäß einem der Ansprüche 1 bis 5, wobei der Haftklebstoff 0,1 ~ 5 Gewichtsteile eines Klebrigmachers pro 100 Gewichtsteile des Basispolymers einschließt, und der Klebrigmacher einer oder zwei oder mehr ist, ausgewählt aus:

   Verbindungen auf Phenolbasis mit einem Löslichkeitsparameter von 8,5 $(cal/cm^3)^{1/2}$ oder größer; Verbindungen auf Aminbasis mit einem Löslichkeitsparameter von 8,5 $(cal/cm^3)^{1/2}$ oder größer; und der Kolophoniumfamilie.

7. Schutzfolie für einen Anstrichfilm gemäß Anspruch 6, wobei die Verbindungen auf Phenolbasis eine oder zwei oder mehr sind, ausgewählt aus Phenolharzen, Alkylphenolharzen, Kolophonium-modifizierten Harzen auf Phenolbasis und Terpen-modifizierten Phenolharzen.

**Revendications**

1. Feuille protectrice pour film de peinture ayant une couche d'adhésif sensible à la pression sur un substrat support, où la couche d'adhésif sensible à la pression est constituée d'un adhésif sensible à la pression non réticulé, l'adhésif sensible à la pression a une masse moléculaire moyenne en poids (Mw) de 65 × $10^4$ à 120 × $10^4$, et une masse moléculaire moyenne en nombre (Mn) de 10 × $10^4$ à 25 × $10^4$, l'indice de polydispersité (Mw/Mn) de l'adhésif sensible à la pression étant égal ou supérieur à 5, ainsi que mesuré par les méthodes décrites dans la description, et le polymère de base de l'adhésif sensible à la pression est un polymère à base d'isobutylène.

2. Feuille protectrice pour film de peinture selon la revendication 1, dans lequel l'indice de polydispersité (Mw/Mn) de l'adhésif sensible à la pression est égal ou supérieur à 5,5.

3. Feuille protectrice pour film de peinture selon la revendication 1 ou 2, dans lequel l'adhésif sensible à la pression a une viscosité dans une solution de toluène à 10 % en poids à 30 °C de 5 mPa·s ou moins.

4. Feuille protectrice pour film de peinture selon l'une quelconque des revendications 1 à 3, dans laquelle deux ou plusieurs types de polymères ayant des Mw différentes sont mélangées dans l'adhésif sensible à la pression en tant que polymère de base.

5. Feuille protectrice pour film de peinture selon l'une quelconque des revendications 1 à 4, dans laquelle un ou des constituants ayant une masse moléculaire de 2 000 ou moins au sein de l'adhésif sensible à la pression vont de 0,1 à 5 parties en poids pour 100 parties en poids du polymère de base de l'adhésif sensible à la pression.

6. Feuille protectrice pour film de peinture selon l'une quelconque des revendications 1 à 5, dans laquelle l'adhésif sensible à la pression inclut de 0,1 à 5 parties en poids d'un agent collant pour 100 parties en poids du polymère de base, et
l'agent collant est un ou deux ou plus choisis parmi :

des composés à base de phénol ayant un paramètre de solubilité de 8,5 $(cal/cm^3)^{1/2}$ ou plus ;
des composés à base d'amine ayant un paramètre de solubilité de 8,5 $(cal/cm^3)^{1/2}$ ou plus ; et la famille de la colophane.

7. Feuille protectrice pour film de peinture selon la revendication 6, dans laquelle les composés à base de phénol sont un ou deux ou plus choisis parmi des résines phénoliques, des résines alkylphénoliques, des résines à base de phénol à modification colophane et des résines phénoliques à modification terpène.

[Fig. 1]

FIG.1

1A — 2

1 — 1

1B

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2832565 B
- JP 2007238746 A
- JP 2005213280 A
- JP H10176152 B
- JP 2008138067 A
- JP 2001034854 A
- EP 0955346 A1
- WO H93420 A

### Non-patent literature cited in the description

- **HIDEKI YAMAMOTO.** SP value fundamentals, application, and calculation method. Johokiko Publishing, 03 April 2006, 66-67